# EUROPÄISCHE PATENTSCHRIFT

(11) **EP 3 968 297 B1**
(45) Veröffentlichungstag und Bekanntmachung des Hinweises auf die Patenterteilung: **20.11.2024**
(21) Anmeldenummer: 21165419.9
(22) Anmeldetag: 27.03.2021
(51) Int. Cl.: G08B 25/00, G08B 13/16, B61L 25/02, G08B 21/02, B61L 15/00, B61L 27/00

(54) **VERFAHREN ZUR ÜBERWACHUNG EINER EISENBAHNANLAGE, ÜBERWACHUNGSSYSTEM UND ÜBERWACHUNGSMODUL**
METHOD FOR MONITORING A RAILWAY SYSTEM, MONITORING SYSTEM AND MONITORING MODULE
PROCÉDÉ DE SURVEILLANCE D'UNE INSTALLATION FERROVIAIRE, SYSTÈME DE SURVEILLANCE ET MODULE DE SURVEILLANCE

(30) Priorität: 09.09.2020 EP 20195371
(43) Veröffentlichungstag der Anmeldung: 16.03.2022
(73) Patentinhaber: Schweizerische Bundesbahnen SBB, 3000 Bern (CH)
(72) Erfinder: Wittwer, Patrick, 3000 Bern (CH); Karppinen, Henrik, 3000 Bern (CH); Soltermann, Christoph, 3000 Bern (CH); Aebischer, Stefan, 3000 Bern (CH)
(74) Vertreter: Rutz & Partner

(56) Entgegenhaltungen:
- EP-A1- 3 275 763
- WO-A1-2015/103615
- GB-A- 2 451 241
- GB-A- 2 533 396
- US-A1- 2005 251 343
- US-A1- 2010 085 188

## Beschreibung

Die Erfindung betrifft ein Verfahren zur Überwachung einer Eisenbahnanlage sowie ein Überwachungssystem und ein Überwachungsmodul für das Überwachungssystem.

Sachbeschädigungen durch Personen, die in Eisenbahnanlagen eindringen, verursachen den Bahnbetreiber jährlich erhebliche Kosten und Unannehmlichkeiten. In Eisenbahnbetrieben erfordert die Verunstaltung von Eisenbahnwagen durch Sprayen regelmässig aufwändige Reinigungsarbeiten und Instandsetzungsarbeiten und verhindert vereinzelt sogar den Einsatz des Rollmaterials. Beschädigungen durch Besprayen von Hauswänden, Brücken oder Fassaden sind nicht weniger problematisch. Vermehrt stellt die Reduktion der Sicherheit in öffentlichen Anlagen ein Problem dar, welchem generell mit erhöhtem Einsatz von Sicherungskräften begegnet wird. Aufgrund der hohen Kosten kann diese Art der Überwachung jedoch oft nicht im erforderlichen Umfang durchgeführt werden. Oft werden daher Überwachungssysteme eingesetzt, die es erlauben, das Überwachungspersonal nur im Ereignisfall einzusetzen.

Aus der DE102013007015A1 ist ein Überwachungssystem bekannt, mit dem Kraftfahrzeuge überwacht werden können. Das Überwachungssystem umfasst Akustiksensoren und Datenverarbeitungsmittel. Mittels der Akustiksensoren wird eine aktuelle Geräuschkulisse erfasst, die in der Folge mit Vandalismustypischen Geräuschen und Geräuschmustern verglichen wird, die zuvor in die Datenverarbeitungsmittel eingespeichert wurden.

Aus der WO200855306A1 ist ein Überwachungssystem für den Einsatz im Bereich öffentlicher Transportsysteme bekannt, bei dem mittels eines Akustiksensors akustische Signale erfasst und verarbeitet werden. Verläufe akustischer Signale werden in Blöcke aufgeteilt und hinsichtlich des Vorliegens bestimmter Geräuschmerkmale analysiert und entsprechend klassifiziert. Bei der Detektion einer Sachbeschädigung wird ein Alarm ausgelöst.

Diese Überwachungssysteme sind nur für die Sicherung bestimmter Schutzobjekte einsetzbar. Für den Schutz grossräumiger Eisenbahnanlagen sind diese Überwachungssysteme nicht geeignet.

Nachteilig bei diesen Überwachungssystemen ist zudem, dass der gewonnene Informationsgehalt relativ gering ist, sodass die Detektion widerrechtlicher Vorgänge mit einem beträchtlichen Fehlerrisiko behaftet ist. Rechtswidrige Vorgänge werden gegebenenfalls nicht erfasst (sogenannte "false negatives") oder unkritische Vorgänge werden als rechtswidrig qualifiziert (sogenannte "false positives"). Beide Arten der Detektionsfehler haben negative Folgen. Im ersten Fall ("false negatives") wird kein Alarm ausgelöst und es erfolgt kein Einsatz des Sicherungspersonals, weshalb die eindringenden Personen an der Ausführung der Sachschäden nicht gehindert und auch nicht festgehalten werden. Im zweiten Fall ("false positives") wird Alarm ausgelöst und es erfolgt unnötigerweise ein Einsatz des Sicherungspersonals, was mit erheblichen Kosten verbunden ist.

Sofern das Eindringen von Personen hingegen korrekt detektiert und diese Personen auch festgehalten wurden, so genügt das Beweismaterial oft nicht, um einen kausalen Zusammenhang zwischen den Handlungen jeder Person und dem festgestellten Schaden rechtsgenügend nachzuweisen. Wenn z.B. einer oder mehrere Schäden durch eine Mehrzahl an Schädigern verursacht wurden, sind im Bereich der Anspruchskonkurrenz die Handlungen der einzelnen Schädiger basierend auf den zugrundeliegenden Kausalitäten den einzelnen Teilschäden bzw. die verursachten Teilschäden über die tatsächlichen Handlungsketten anhand der Kausalitäten den einzelnen Schädigern zuzurechnen, was anhand der vorliegenden Beweismittel oft nicht gelingt.

Weiterhin besteht das Problem, dass das Eindringen erst spät entdeckt wird, sodass zur Einleitung von Gegenmassnahmen oft zu wenig Zeit verbleibt.

Zu beachten ist ferner, dass Überwachungsmittel meist gut erkennbar sind, sodass diese oft selbst Gegenstand der Sachbeschädigung werden.

Weiterhin sind die Überwachungsmittel regelmässig mit erheblichem Aufwand zu montieren, sodass auch diesbezüglich Nachteile resultieren. Einerseits ergibt sich für die Installation ein erheblicher Kostenaufwand. Zudem nimmt die Installation jeweils Zeit in Anspruch, sodass ein rascher und flexibler Einsatz der Überwachungsvorrichtung mit Anpassung an jeweils ändernde Situationen nur mit grossem Aufwand möglich ist.

Die US20160203699A1 offenbart eine Vorrichtung zur elektronischen Überwachung mit Datenerfassungsgeräten, die Daten (z.B. Bilder und Töne) kontinuierlich an einen Prozessor übertragen, der die Daten analysiert und mit gespeicherten Datenmustern vergleicht, um bestimmte Aktivitäten zu ermitteln. Zur Reduktion des Energieverbrauchs in den Datenerfassungsgeräten werden diese mit einer minimalen Funktionalität versehen.

Die GB2451241A betrifft ein Infraschall-Einbruchalarmsystem mit einem Wandler zum Erfassen von Infraschallfrequenzschwankungen, einem Signalverstärker, einem Analog-Digital-Wandler, der einen Teil des Analogsignals, der mindestens eine vorbestimmte Schwelle überschreitet, in eine digitale Signatur umwandelt, und einem Prozessor, der die digitale Signatur mit bekannten digitalen Signaturen vergleicht und ein Alarmereignis auslöst, wenn das erzeugte digitale Signal mit einer bekannten Signatur übereinstimmt. Die Auswertung von Infraschallsignalen erlaubt das Detektieren von Personen in einem Areal, lässt aber kaum Rückschlüsse auf diese Personen und deren Verhalten zu.

Die US2015201165A1 offenbart ein Verfahren zur Überwachung eines befahrenen Gleises oder der Umgebung. Die Überwachung einer Eisenbahnanlage hinsichtlich des Eindringens von Personen ist nicht vorgesehen.

Der vorliegenden Erfindung liegt daher die Aufgabe zugrunde, ein verbessertes Verfahren zur Überwachung einer Eisenbahnanlage, ein verbessertes Überwachungssystem sowie ein verbessertes Überwachungsmodul für dieses Überwachungssystem zu schaffen.

Mittels des erfindungsgemässen Verfahrens und des erfindungsgemässen Überwachungssystems soll das gegebenenfalls unberechtigte Eindringen von Personen in eine überwachte Eisenbahnanlage mit hoher Zuverlässigkeit korrekt detektierbar sein. Dabei sollen Fehlalarme und nicht notwendige Einsätze des Sicherungspersonals vermieden werden. Hingegen soll rechtswidriges Eindringen mit erhöhter Sicherheit festgestellt werden können.

Das Überwachungssystem soll leicht skalierbar sein, sodass kleinere Anlagen oder auch grossräumige Areale mit geringem Aufwand überwacht werden können. Insbesondere sollen Eisenbahnanlagen vorteilhaft überwacht werden können.

Das Eindringen von Personen soll dabei frühzeitig erfasst werden, sodass mehr Zeit zur Einleitung von Gegenmassnahmen zur Verfügung steht und die betreffenden Personen angehalten werden können.

Das erfindungsgemässe Überwachungssystem soll kostengünstig und robust aufgebaut sein und mit geringem Aufwand rasch installiert und an Änderungen der Eisenbahnanlage angepasst werden können.

Dabei soll vermieden werden, dass das Überwachungssystem selbst leicht beschädigt und ausser Funktion gesetzt werden kann.

Eingesetzte Überwachungsmodule sollen über längere Zeit autonom mit Batterien oder Akkumulatoren arbeiten können, ohne dass Wartungsarbeiten erforderlich sind. Der Energieverbrauch von Überwachungsmodulen oder Datenerfassungsgeräten soll daher weiter reduziert werden.

Die Lösung dieser Aufgabe gelingt mit einem verbesserten Verfahren zur Überwachung einer Eisenbahnanlage nach Anspruch 1 und einem verbesserten Überwachungssystem nach Anspruch 10.

Das Verfahren dient der Überwachung insbesondere von Eisenbahnanlagen hinsichtlich des Eindringens von Personen mit einem Überwachungssystem. Das Überwachungssystem umfasst mehrere Sensoren, die der Erfassung von Emissionen der Personen oder von Geräten, wie Geräusche, Sprache, Gase, Strahlung und Erschütterungen, und der Abgabe entsprechender Sensorsignale dienen, sowie wenigstens eine Computereinheit mit einem implementierten Überwachungsprogramm zur Verarbeitung der Sensorsignale.

Erfindungsgemäss werden mehrere von Batterien bzw. Akkumulatoren gespeiste Überwachungsmodule innerhalb der Eisenbahnanlage voneinander beabstandet angeordnet,
- die je wenigstens einen Sensor aufweisen, mit dem Emissionen erfasst und entsprechende lokale Sensorsignale gebildet werden;
- die je wenigstens ein Computermodul mit einem Prozessor und einer Speichereinheit aufweisen, in dem ein lokales Überwachungsprogramm implementiert ist, mittels dessen die lokalen Sensorsignale verarbeitet werden, um entsprechende lokale Informationen zu ermitteln;
- die je wenigstens eine Kommunikationseinheit aufweisen, mittels der die lokalen Informationen direkt oder indirekt zu einem Zentralcomputer übertragen werden, und
- die ein Gehäuse (13) in der Form eines anlagentypischen Elements, wie der Form eines Schottersteins, aufweisen.

Weiterhin ist vorgesehen
- dass in der Speichereinheit der Computermodule der Überwachungsmodule Mustersignale oder Musterinformationen bzw. Vergleichsmuster gespeichert werden, die für das Eindringen der Personen typische oder für die Eisenbahnanlage typische Ereignisse repräsentieren;
- dass mittels des lokalen Überwachungsprogramms für die lokalen Sensorsignale in den Computermodulen Ereignismuster ermittelt und mit gespeicherten Vergleichsmustern verglichen werden, um lokale Informationen zu ermitteln, die zum Zentralcomputer übertragen werden; und
- dass im Zentralcomputer ein zentrales Überwachungsprogramm implementiert ist, welches die von den Überwachungsmodulen abgegebenen lokalen Informationen auswertet, um zum Verhalten eindringender Personen innerhalb der überwachten Eisenbahnanlage Ereignisse individuell oder miteinander verknüpft als Ereignisabläufe zu ermitteln.

Das Überwachungsprogramm ist hinsichtlich der zu überwachenden Prozesse und/oder der zu überwachenden Anlagen vorzugsweise trainiert, sodass relevante Emissionen erfasst, gegebenenfalls gefiltert, und vorzugsweise von unkritischen z.B. für die überwachte Anlage typischen Emissionen unterschieden werden können.

Durch die Verwendung von mehreren voneinander beabstandeten Überwachungsmodulen, die vorzugsweise über drahtlose Kommunikationsverbindungen mit dem Zentralcomputer verbunden sind, kann ein unberechtigtes Eindringen von Personen in das Areal frühzeitig erfasst werden. Die Überwachungsmodule können vorteilhaft nicht nur beabstandet voneinander, sondern auch wahlweise beabstandet von zu schützenden Objekten bzw. Schutzobjekten positioniert werden. Auf diese Weise kann ein Überwachungssystem rasch installiert und an Änderungen der Anlage sowie der darin positionierten Schutzobjekte angepasst werden. Dabei ist es nicht notwendig, dass die Überwachungsmodule fest montiert werden. Die Überwachungsmodule können zufällig verteilt angeordnet werden, sodass sie für die eindringenden Personen kaum erkennbar und kaum lokalisierbar sind. Durch die Wahl der Anzahl der Überwachungsmodule kann das Überwachungssystem mit minimalem Aufwand skaliert und an die Grösse der zu überwachenden Anlage angepasst werden. Die Überwachungsmodule können innerhalb weniger Minuten positioniert und auch wieder eingesammelt werden, sodass das erfindungsgemässe Überwachungssystem auch nur sporadisch eingesetzt werden kann, beispielsweise wenn sich in einem Gebiet Straftaten häufen.

Erfindungsgemäß werden die Überwachungsmodule mit einem Gehäuse in der Form eines anlagentypischen Elements, wie der Form eines Steins, vorzugsweise Schottersteins, vorgesehen und anlagentypisch in die Anlage integriert. Der künstliche Schotterstein kann dabei nicht von den realen Schottersteinen im Gleisbett unterschieden werden, weshalb die eindringenden Personen die entsprechend ausgestalteten Überwachungsmodule nicht erkennen und ausser Funktion setzen können. Durch ihre "Stealth"-Funktion sind die Überwachungsmodule daher besonders gut gegen Zerstörung geschützt. Ferner weisen die Überwachungsmodule vorzugsweise ein stabiles Gehäuse aus Metall oder Kunststoff auf, welches durch Schläge oder Tritte nicht beschädigt wird. Elektronische Module werden vorzugsweise elastisch gelagert, sodass mechanische Einwirkungen gedämpft werden und keinen Schaden anrichten.

Vorzugsweise werden bei der Installation die Positionsdaten der Überwachungsmodule erfasst oder automatisch von den Überwachungsmodulen, die dazu vorzugsweise mit einem GPS-Modul ausgerüstet sind, erfasst und gemeldet. Geeignet sind z.B. Produkte von SparkFun Electronics https://www.sparkfun.com/, wie GPS-15210 /SAM-M8Q, die Positionsdaten mit hoher Auflösung liefern und die nur geringe Abmessungen von z.B. 16 cm² aufweisen. Positionsdaten können z.B. mit einer Präzision von 2.5 m bis zu wenigen Dezimetern geliefert werden.

Vorzugsweise werden bei der Installation oder bei den Datenübertragungen jeweils Identifikationsdaten und/oder Positionsdaten und/oder Sensordaten und/oder Statusdaten betreffend das Überwachungsmodul und/oder dessen Umgebung übertragen.

Ermittelte Sensorsignale oder daraus extrahierte Informationen oder Ereignisse können dadurch mit präzisen Positionsdaten und Zeitdaten verknüpft werden, sodass für jeden Schadensfall wenigstens ein Ereignisverlauf erstellt und dokumentiert werden kann. Weiterhin können Überwachungsmodule, gegebenenfalls zum Zweck der Deinstallation oder Wartung leicht lokalisiert werden.

Die Überwachungsmodule sind ausgelegt, nur wenig Energie zu benötigen. Im Gegensatz zur Lehre der US20160203699A1 wird dabei mehr und nicht weniger Funktionalität in die Überwachungsmodule integriert, um den Energiebedarf der Überwachungsmodule zu reduzieren. Die erhöhte Funktionalität sieht vor, dass in der Speichereinheit der Computermodule der Überwachungsmodule Vergleichsmuster gespeichert werden, die für das Eindringen der Personen typische oder für die Eisenbahnanlage typische Ereignisse repräsentieren und dass mittels des lokalen Überwachungsprogramms für die lokalen Sensorsignale in den Computermodulen Ereignismuster ermittelt oder gebildet und mit gespeicherten Vergleichsmustern verglichen werden, um lokale Informationen zu ermitteln, die zum Zentralcomputer übertragen werden.

Vergleichsmuster basieren auf Erfahrungswerten, die über längere Betriebsperioden, z.B. während Jahren, gesammelt werden. Gesammelte Vergleichsmuster werden durch Lernen und Training permanent optimiert, ergänzt und vorzugsweise an die überwachte Anlage angepasst. Das Überwachungssystem kann auch selbst lernend sein und neue kritische Ereignismuster automatisch als Vergleichsmuster in die Datenbank aufnehmen.

Aus diesen Massnahmen resultiert eine hohe Funktionalität der Überwachungsmodule, die es erlaubt, durch Vergleich mit gespeicherten Vergleichsmustern kritische Ereignismuster zu identifizieren und entsprechende lokale Informationen zu bilden, die zum Zentralcomputer übertragen werden. Durch die wesentlich erhöhten Funktionalität der Überwachungsmodule wird somit eine rasche dezentrale Erkennung kritischer Ereignismuster ermöglicht. In der Folge reduziert sich die Datenübertragung zum Zentralcomputer auf relativ geringe Datenmengen, die nur in Ereignisfällen zu übertragen sind. Obwohl Ereignisfälle erhebliche Schäden verursachen können, treten sie relativ selten auf. Das Überwachungssystem kann daher in wesentlichen Teilen über längere Zeitperioden inaktiv sein oder in einem teilweisen Schlafmodus verweilen. Eine kontinuierliche Übertragung von Daten, die einen relativ hohen Energiebedarf erfordert und die Batterien oder Akkumulatoren der Überwachungsmodule belastet, wird vermieden. Der lokal in die Überwachungsmodulen vollzogene Mustervergleich erfordert relativ wenig Energie. Zudem kann der Systemanteil, der für den Mustervergleich vorgesehen ist, jeweils nur in Fällen aktiviert werden, in denen Emissionen, wie Geräusche und Erschütterungen, detektiert werden. Vorzugsweise wird ein sogenannter «Watchdog» vorgesehen, der wenig Energie benötigt und das Überwachungsmodul aktiviert, sobald eine Emission detektiert wird. Das Überwachungsmodul, das durch den «Watchdog» zuerst aktiviert wird, sendet vorzugsweise ein Aufwachsignal an alle weiteren Überwachungsmodule, sodass bei der Detektion einer Emission alle Überwachungsmodule rasch aktiviert werden.

Vorzugsweise werden Betriebsprogramme vorgesehen, die es erlauben, die Überwachungsmodule in einen Schlafmodus zu versetzen, bis Sensorsignale erfasst werden oder bis sie von der Überwachungszentrale in den Betriebszustand versetzt werden. Ferner ist der Einsatz von Zeitprogrammen oder Zeitmodulen möglich, welche die Überwachungsmodule für Zeitperioden aktivieren, in denen die Anlage nicht anderweitig überwacht wird. Die Überwachungsmodule können mit einer Ladung des Akkumulators über längere Zeit, z.B. einige Wochen bis mehrere Monate betrieben werden können.

In vorzugsweise Ausgestaltungen sind die Überwachungsmodule je mit einem thermoelektrischen Generator oder mit Solarzellen ausgerüstet, der bzw. die es erlauben, dass Überwachungsmodul praktisch für eine unbegrenzte Zeit zu betreiben (siehe z.B. https://de.wikipedia.org/wiki/Thermoelement#Thermoelektrischer Generator).

Primär-Informationen, die unmittelbar für die Erkennung des Eindringens von Personen wichtig sind, werden in den Überwachungsmodulen ermittelt und als lokale Informationen zum Zentralcomputer weitergeleitet. Der Zentralcomputer verarbeitet die Primär-Informationen und bildet Sekundär-Informationen, welche den Ereignisverlauf abbilden und daher einerseits für die Einleitung von Aktionen des Überwachungspersonals und andererseits für die Beweisführung im Schadensfall hilfreich sind.

Falls ein Schwellwert zur Auslösung eines Alarms noch nicht überschritten ist, können die Sensorsignale in den Überwachungsmodulen zur Ermittlung von Primär-Informationen oder die lokalen Informationen im Zentralcomputer zur Ermittlung von Sekundär-Informationen weiter überprüft werden, um zusätzliche Entscheidungsgrundlagen zu erhalten. Bei der Aufzeichnung von Daten sind selbstverständlich rechtliche Rahmenbedingungen zu beachten.

In einem Ereignisfall kann der Zentralcomputer zusätzlich zu den lokalen Informationen auf weitere Informationen, wie die Sensorsignale und die Ereignismonster von den Überwachungsmodulen abfragen. Mustervergleich kann bedarfsweise auch vom Zentralcomputer durchgeführt werden, um Ereignisse zu verifizieren.

Die Überwachungsmodule sind mit wenigstens einem Sensor ausgerüstet, der zur Erfassung von Emissionen geeignet ist, die beim Eindringen von Personen und bei Schädigungshandlungen typischerweise auftreten. Vorzugsweise werden verschiedene physikalische, optische, mechanische, elektronische, und chemische Sensoren in Kombination eingesetzt.

Zur Auswertung der Sensorsignale werden in den Überwachungsmodulen Ereignismuster, vorzugsweise Frequenzmuster und/oder Wortmuster ermittelt und mit gespeicherten Vergleichsmustern verglichen. Vorzugsweise werden die ermittelten Sensorsignale in einem Signalprozessor verarbeitet und gegebenenfalls gefiltert und verstärkt.

Beispielsweise werden durch eine Fourier-Transformation der Sensorsignale Frequenzmuster ermittelt, die mit zuvor gespeicherten Frequenzmustern, beispielsweise Frequenzmustern des Schüttelns einer Spraydose, Frequenzmustern von Spraygeräuschen, verglichen werden, um die entsprechenden Ereignisse zu identifizieren.

Erfindungsgemäss werden so viele Informationen, wie möglich, lokal in den Überwachungsmodulen gewonnen, sodass anstelle grosser Datenmengen für die Sensorsignale extrahierte Informationen übertragen werden können, die gegebenenfalls nur wenige Bytes umfassen. Beispielsweise kann aus einem Sprachsignal ein Wort oder Satz extrahiert werden, welcher für das Eindringen von Personen relevant sein kann.

Die erfassten Sensorsignale können in einer ersten Stufe gefiltert werden, z.B. um Hintergrundsignale auszublenden. In der Folge können die ermittelten Ereignismuster in den Überwachungsmodulen mit gespeicherten Vergleichsmustern verglichen werden, um Informationen bezüglich der Ereignisse zu gewinnen, welche die Sensorsignale verursacht haben. Aus akustischen Signalen können Worte, Sprachen, oder Werkzeug-typische Geräusche ermittelt werden. Die Ermittlung von gesprochenen Worten kann für das Vokabular eindringender Personen typisch sein. Geräusche von geschüttelten und betätigten Spraydosen können ebenfalls gut identifiziert werden. Mittels Gassensoren kann versprühtes Gas detektiert werden. Mittels Beschleunigungssensoren können Erschütterungen erfasst werden, die von den eindringenden Personen verursacht werden.

Durch Analyse der festgestellten Ereignisse, wie die Feststellung der Anzahl eindringender Personen, die Identifikation wenigstens eines gesprochenen Worts oder die Identifikation von Werkzeuggeräuschen kann hinreichend sein für die Auslösung eines Alarms. Möglicherweise genügt die Detektion nur weniger dieser Ereignisse, die für die Feststellung des Eindringens typischerweise eine unterschiedliche Relevanz aufweisen.

Im Zentralcomputer werden lokal in den Überwachungsmodulen ermittelte Ereignisse bzw. entsprechende lokale Informationen anhand von Positionsdaten und Zeitdaten in Kontext zueinander gestellt, sodass der Ereignisablauf ermittelt werden kann. Die von den Überwachungsmodulen abgegebenen lokalen Informationen werden miteinander verknüpft, um Ereignisabläufe zu ermitteln. Lokale Informationen, die von den Überwachungsmodulen zu Zentralcomputer übertragen werden, sind daher mit einem Zeitstempel versehen. Beispielsweise werden Bewegungen von zwei Personen registriert. Eine Person bewegt sich innerhalb einer ersten Zeitperiode von einer ersten zu einer zweiten Position auf den Schutzgegenstand zu und hantiert dort innerhalb einer zweiten Zeitperiode mit einem Werkzeug, welches als Spraydose identifiziert wird. Eine andere Person verharrt während der ersten und zweiten Zeitperiode an einer dritten Position und führt ein kurzes Gespräch, in dem z.B. die Worte »Farbe« und »Spraydose« erkannt werden.

Anhand des erfindungsgemässen Verfahrens werden daher Ereignisabläufe und Ereignisdetails ermittelt, wie die Anzahl der Personen, das Bewegungsverhalten der Personen, der Bewegungsverlauf der Personen, die Sprache der Personen, Schlüsselworte der Personen, mitgeführte Werkzeuge oder Geräte und Telekommunikationsmittel sowie der gesamte zeitliche Ablauf. Die zur Detektion von Ereignissen vorgesehenen

Die Ermittlung des Ereignisablaufs kann für den sofortigen Einsatz des Sicherungspersonals oder auch für die spätere Beweisführung im Strafprozess besonders wichtig sein.

Dem Sicherungspersonal kann z.B. mitgeteilt werden, wie viele Personen eingedrungen sind und aus welcher Richtung eingedrungen sind. Das Sicherungspersonal kann daher den Zugangsweg absichern, der typischerweise auch den Rückzugsweg bildet. Ferner kann das Einsatzkommando entsprechend dimensioniert und ausgerüstet werden.

Für den Nachweis des unberechtigten Eindringens können den einzelnen Personen anhand des ermittelten Ereignisablaufs einzelne Handlungen zugeordnet werden. Möglicherweise hat sich nur eine Person an dem Ort aufgehalten, an dem ein bestimmter Schaden aufgetreten ist. Möglicherweise waren mehrere Personen beteiligt, denen anhand des erfindungsgemässen Verfahrens einzelne Handlungen schlüssig zugeordnet werden können.

Vorzugsweise werden die Ereignismuster nach Vergleich mit Vergleichsmustern als Ereignisse je einer Ereignisklasse zugeordnet. Den einzelnen Ereignisklassen werden in der Folge Regeln zugeordnet, gemäss denen die registrierten Ereignisse in jeder Ereignisklasse zu behandeln sind. Ein Spraygeräusch ist gemäss den Regeln z.B. mit höherer Priorität zu behandeln als ein Trittgeräusch.

Beispielsweise wird den Ereignisklassen je ein Gewichtungsfaktor, der in Abhängigkeit der Relevanz für das Eindringen von Personen gewählt ist, zugeordnet. Der Entscheid zum Vorliegen eines Eindringens von Personen wird in der Folge unter Berücksichtigung der zugeordneten Gewichtungsfaktoren gefällt, wobei für die Anzahl der gewichteten Ereignisse vorzugsweise ein Mittelwert gebildet wird, der mit einem Schwellwert verglichen wird.

Alternativ oder zusätzlich zur Zuordnung von Gewichtungsfaktoren wird den Ereignisklassen vorzugsweise je ein Unsicherheitsfaktor, der das Mass der Übereinstimmung der Ereignismuster und der gespeicherten Vergleichsmuster repräsentiert, zugeordnet. Der Entscheid zum Vorliegen eines Eindringens von Personen wird in der Folge unter Berücksichtigung der zugeordneten Unsicherheitsfaktoren gefällt, wobei für die Anzahl der mit den Unsicherheitsfaktoren verrechneten und gegebenenfalls gewichteten Ereignisse vorzugsweise ein Mittelwert gebildet wird, der mit dem Schwellwert verglichen wird.

Durch die Zuordnung von Gewichtungsfaktoren kann die Relevanz der Ereignisse beurteilt werden, sodass ein Entscheid zum Vorliegen eines Eindringens mit hoher Zuverlässigkeit gefällt werden kann und Fehlalarme weitgehend vermieden werden können. Durch Berücksichtigung des Masses der Übereinstimmung der gemessenen Sensorsignale mit Signalmustern, kann das Risiko eines Fehlalarms einerseits weiter reduziert werden. Andererseits werden nicht vollständig befriedigende Sensorsignale nicht verworfen, sondern ebenfalls berücksichtigt, um das Risiko zu vermeiden, dass ein Eindringen von Personen nicht erfasst wird.

Durch die Erfassung der Wahrscheinlichkeiten der Ereignisse kann dem Alarmreport auch eine Wahrscheinlichkeit zugeordnet werden, welche einer Einsatzzentrale bei Vorliegen mehrerer Alarmreporte erlaubt, Prioritäten zu setzen und die Einsätze entsprechend zu planen. Der Informationsgehalt des Alarmreports gibt Aufschluss über die Vorgänge und die beteiligten Personen, weshalb Sicherungspersonal entsprechend eingesetzt werden kann. Enthält der Alarmreporte die Mitteilung, dass an der Aktion mehrere Personen beteiligt sind, so kann das Sicherungspersonal entsprechend verstärkt werden.

Die Vernetzung der Überwachungsmodule untereinander oder mit dem Zentralcomputer kann durch verschiedene Kommunikationstechnologien oder Netzwerktechnologien erfolgen. Möglicherweise können auch mehrere Kommunikationsstrukturen einander überlagert werden, sodass ein redundantes Kommunikationssystem resultiert. Vorzugsweise wird vorgesehen, dass die Überwachungsmodule über bidirektionale Kommunikationskanäle miteinander verbunden sind und/oder dass der Zentralcomputer je über einen unidirektionalen oder bidirektionalen Kommunikationskanal mit wenigstens einem der Überwachungsmodule verbunden ist.

In vorzugsweisen Ausgestaltungen sind die Überwachungsmodule in der Lage, als Relaisstationen zu dienen, um Nachrichten von anderen Überwachungsmodulen an den Zentralrechner weiterzuleiten.

Die von jedem der Überwachungsmodule abgegebenen lokalen Informationen können vorzugsweise direkt von jedem der Überwachungsmodul oder indirekt über eines der Überwachungsmodule zum Zentralcomputer übertragen werden.

Vorzugsweise kann jedes der Überwachungsmodule durch wenigstens eines der benachbarten Überwachungsmodule oder durch den Zentralcomputer überwacht werden. Der Ausfall eines Überwachungsmoduls wird durch den Zentralcomputer registriert, sodass eine Fehlinterpretation hinsichtlich des Ausbleibens von Sensorsignalen von diesem Überwachungsmodul verhindert wird und gegebenenfalls anderweitig kompensiert wird.

Vorzugsweise ist das Überwachungssystem in Abhängigkeit der im Betriebszustand befindlichen Überwachungsmodule jeweils konfigurierbar oder rekonfigurierbar. Dabei können Inbetriebnahme-Routinen vorgesehen werden, bei denen Statusmeldungen der Überwachungsmodule, die z.B. die Identifikation, die Position, die Ausrüstung und gegebenenfalls weitere Eigenschaften und Zustände jedes Überwachungsmoduls enthalten, zum Zentralcomputer gesandt werden.

In Zentralcomputer ist vorzugsweise ein Programmodul vorgesehen, das in der Lage ist, die überwachte Anlage, die installierten Überwachungsmodule und deren Zustände grafisch darzustellen.

Das erfindungsgemässe Überwachungssystem ist in Eisenbahnanlage vorteilhaft einsetzbar, kann aber auch in Anlagen mit gleichen Anforderungen an die Sicherungstechnik eingesetzt werden.

Nachfolgend wird die Erfindung anhand von Zeichnungen näher erläutert. Dabei zeigt:
- Fig. 1: eine Eisenbahnanlage 1000, in die Personen A, B eingedrungen sind, und ein Überwachungssystem 100 mit mehreren Überwachungsmodulen 1A, ..., 1E, mittels denen die Emissionen der Personen A, B erfasst und anhand eines lokalen Überwachungsprogramms 19 ausgewertet werden, und mit einem Zentralcomputer 101, in dem die von den Überwachungsmodulen 1A, ..., 1E übermittelten Ereignisse und Informationen anhand eines zentralen Überwachungsprogramms 109 ausgewertet werden;
- Fig. 2a: eines der Überwachungsmodule 1 von Fig. 1, welches ein Gehäuse 13 in der Form eines Schottersteins aufweist, in Explosionsdarstellung;
- Fig. 2b: das Überwachungsmodul 1 von Fig. 2a in schematischer Darstellung mit einem Computermodul 11, in dem das lokale Überwachungsprogramm 19 implementiert ist;
- Fig. 3: Funktionsmodule 191, 192, 193, die im lokalen Überwachungsprogramm 19 der Überwachungsmodule 1A, ..., 1E vorgesehen sind; und
- Fig. 4: ein Funktionsmodul 193 des lokalen Überwachungsprogramms 19, von dem lokale Informationen oder lokal ermittelte Ereignis Informationen an das zentrale Überwachungsprogramm 109 übergeben werden, in dem nach Verarbeitung der lokalen Informationen ein Ereignisablaufs ermittelt wird.

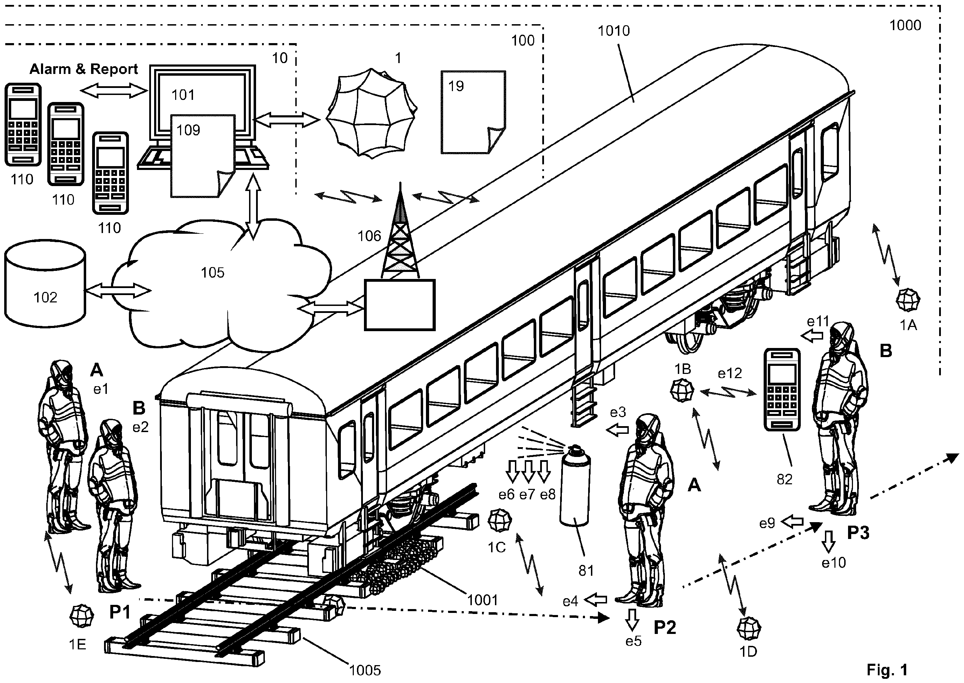

Fig. 1 zeigt eine Eisenbahnanlage 1000 mit einem auf einem Geleise 1005 abgestellten Eisenbahnwagen 1010. Zum Schutz der Eisenbahnanlage 1000 ist ein Überwachungssystem 100 vorgesehen, welches eine Überwachungszentrale 10 mit einem Zentralcomputer 101 sowie mehrere Überwachungsmodule 1A, ..., 1E aufweist, die voneinander beabstandet an kritischen Positionen der Anlage 1000 angeordnet sind.

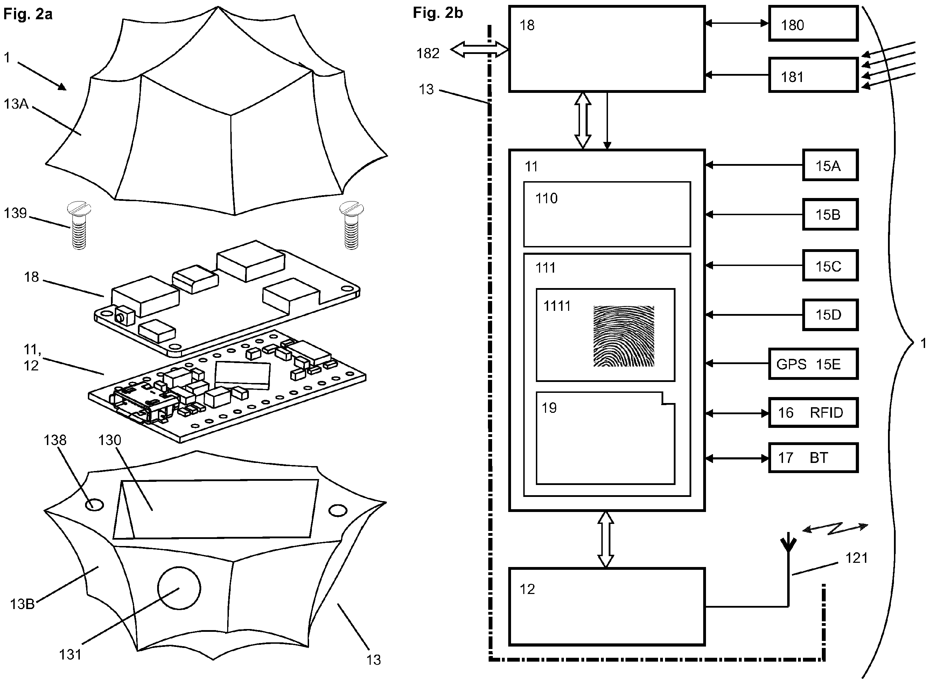

Die in Fig. 1, Fig. 2a und Fig. 2b exemplarisch gezeigten Überwachungsmodule 1A, ..., 1E sind mit Sensoren 15; 15A, ..., 15E ausgerüstet, mit denen vorzugsweise alle Emissionen erfasst werden, die beim Eindringen von Personen in die Anlage 1000 auftreten. Die Überwachungsmodule 1A, ..., 1E sind mit elektronischen Baugruppen ausgerüstet, die es erlauben, Sensorsignale gegebenenfalls zu digitalisieren und zu verarbeiten und vorzugsweise auch zumindest teilweise auszuwerten. Vorgesehen sind ein Computermodul 11 und ein Kommunikationsmodul 12, die auf einer gemeinsamen elektronischen Schaltplatte PCB oder auf getrennten Schaltplatten PCBs angeordnet und miteinander verbunden sind. Zur Energieversorgung sind ein vorzugsweise intelligentes Stromversorgungsmodul 18 und eine Batterie 180 bzw. ein Akkumulator 180 vorgesehen. Die elektrischen und elektronischen Bauteile sind derart ausgelegt und werden derart betrieben, dass nur ein Minimum an elektrischer Energie benötigt wird.

Das Überwachungsmodul 1 umfasst vorzugsweise einen Stromgenerator 181, welcher z.B. Sonnenenergie oder thermische Energie in elektrische Energie wandelt, die vom Stromversorgungsmodul 18 im Akkumulator 180 gespeichert wird. Alternativ kann der Akkumulator 180 über den Anschluss 182 geladen werden.

Im Computermodul 11 ist nebst den notwendigen Betriebsprogrammen das Überwachungsprogramm 19 implementiert, mittels dessen die Signale von den zugeschalteten Sensoren 15, z.B. einem akustischen Sensor 15A, einem mechanischen Sensor, z.B. einem Beschleunigungssensor 15B, einem thermischen Sensor 15C, einem Gassensor 15D, einem GPS-Modul 15E, gegebenenfalls miteinander verknüpft, bearbeitet und gegebenenfalls ausgewertet werden.

In dieser exemplarischen Ausgestaltung ist ein RFID-Modul vorgesehen, mittels dessen das Überwachungsmodul 1 identifiziert und lokalisiert werden kann. Exemplarisch ist weiterhin ein Bluetooth-Modul vorgesehen, welches den Überwachungsmodulen 1A, ..., 1E erlaubt, ein ad-hoc Netzwerk aufzubauen, wie dies z.B. in der US20020120750A1 beschrieben ist. Das Bluetooth-System kann dabei parallel zu anderen Kommunikationssystemen betrieben werden. Vorzugsweise kann sich das Bluetooth-System selbst konfigurieren und gegebenenfalls wenigstens eines der Überwachungsmodule 1A, ..., 1E als Relaisstation konfigurieren, sodass auch bei grösseren Anlagen und Arealen die Kommunikation zwischen den Überwachungsmodulen 1A, ..., 1E sichergestellt ist.

Überwachungsmodule 1A, ..., 1E, wie sie in Fig. 2a und 2b illustriert sind, können in vorzugsweisen Ausgestaltungen somit autonom über eine sehr lange, gegebenenfalls praktisch unbegrenzte Zeit arbeiten und sich selbst konfigurieren und automatisch die Bereitschaft an die Überwachungszentrale 10 melden. Der Zentralcomputer 101 ist vorzugsweise in der Lage, die Überwachungsmodule 1A, ..., 1E zu konfigurieren, abzufragen, neu zu programmieren oder in einen Schlafmodus zu versetzen.

Das Gehäuse 13 der Überwachungsmodule 1A, ..., 1E, welches zwei Schalen 13A, 13B umfasst, hat die unregelmässige Form und Farbe eines Steins vorzugsweise mit den Dimensionen eines Schottersteins, der im Gleisbett oder auch in einer benachbarten Wiese unauffällig platziert werden kann und in der Folge nicht mehr auffällt.

Das Gehäuse 13 ist hinsichtlich der Oberflächenbeschaffenheit und Bemalung an die imitierten Objekte angepasst. Vorzugsweise ist das Gehäuse 13 langgestreckt und mit Kanten und Zacken sowie mit einem regelmässig oder unregelmässig verlaufenden Grauton versehen.

In wenigstens einer der beiden Schalen 13A, 13B ist eine Ausnehmung 130 vorgesehen, in der die elektronischen Baugruppen 11, 12, 18 aufgenommen werden. Die beiden Schalen 13A, 13B sind durch Schrauben 139 miteinander verbindbar, die durch Bohrungen der ersten Schale 13A hindurch führbar und in Gewindebohrungen 138 in der zweiten Schale 13B eindrehbar sind. Die beiden Schalen 13A, 13B sind vorzugsweise mittels wenigstens eines Dichtungsrings (nicht gezeigt) abgedichtet, sodass keine Flüssigkeit zu den elektronischen Modulen 11, 12, 18 gelangen kann.

Zur Aufnahme der Sensoren 15 sind vorzugsweise Sensorkammern mit Auslassöffnungen 131, gegebenenfalls mit einem Lochmuster, vorgesehen. Die Sensorkammern sind gegenüber der Ausnehmung 130 vorzugsweise dicht abgeschlossen. Beispielsweise ist ein mit Dichtstoff abgeschlossener Kanal vorgesehen, durch den die Sensorkabel hindurch geführt sind.

Die einzelnen Überwachungsmodule 1A, ..., 1E sind mit Kommunikationsmodulen 12 (siehe Fig. 2b) ausgerüstet und kommunizieren über eine Antenne 121 mit einer Funkstation 106 und über ein Netzwerk bzw. eine Cloud 105 mit dem Zentralcomputer 101 (siehe Fig. 1). Die Funkstation 106 arbeitet als Gateway zwischen den Überwachungsmodulen 1A, ..., 1E und dem Zentralcomputer 101. Die Kommunikationsmodule 12 umfassen wenigstens ein Sendemodul, mittels dessen Signale und Daten vorzugsweise drahtlos zur Funkstation 106 bzw. zum Zentralcomputer 101 übertragbar sind. Vorzugsweise sind die Kommunikationsmodule 12 zur bidirektionalen Übertragung von Signalen und/oder Daten vorgesehen und zusätzlich mit einer Empfangseinheit ausgerüstet.

Grundsätzlich können beliebige Funknetze verwendet werden, wie sie z.B. in https://de.wikipedia.org/wiki/Funknetz beschrieben sind. Ebenso können beliebige Kommunikationsprotokolle oder Netzwerkprotokolle, wie sie z.B. in https://de.wikipedia.org/wiki/Kommunikationsprotokoll oder z.B. in https://de.wikipedia.org/wiki/Netzwerkprotokoll beschrieben sind, eingesetzt werden.

Vorzugsweise wird ein Long Range Wide Area Network (LoRaWAN) bzw. ein Low-Power-Wireless-Netzprotokoll zur Kommunikation zwischen den Überwachungsmodulen 1A, ..., 1E und dem Zentralcomputer 101 verwendet. LoRaWAN ist asymmetrisch und auf Energieeffizienz ausgerichtet für Reichweiten über 10 km für die Uplink-Kommunikation, also das Senden von den Überwachungsmodulen 1A, ..., 1E zum Zentralcomputer 101. Die Datenübertragungsrate reicht von 292 bit/s bis 50 kbit/s (siehe https://de.wikipedia.org/wiki/Long Range Wide Area Network). Es sind zusätzlich auch weitere Netzwerkarchitekturen und Kommunikationsprotokolle einsetzbar, wie das genannte Bluetooth-System.

Die Position der Überwachungsmodule 1A, ..., 1E wird bei der Installation ermittelt oder wird von den Überwachungsmodulen 1A, ..., 1E anhand des Lokalisierungsmoduls bzw. GPS-Moduls 15E ermittelt und zusammen mit der eindeutigen Identifikationsnummer der Überwachungsmodule 1A, ..., 1E an den Zentralcomputer 101 gemeldet. Im Zentralcomputer 101 ist daher die Konfiguration des Überwachungssystems 100 mit allen relevanten Daten, einschliesslich der Positionsdaten und Identifikationsdaten der Überwachungsmodule 1A, ..., 1E, stets bekannt. Von den Überwachungsmodulen 1A, ..., 1E detektierte Ereignisse können daher stets mit hoher Genauigkeit einer Position zugeordnet werden.

Nebst Betriebsprogrammen sind in den Überwachungsmodulen 1A, ..., 1E lokale Überwachungsprogramme 19 und im Zentralcomputer 101 ein zentrales Überwachungsprogramm 109 implementiert. Überwachungsfunktionen mit Auswertung der Sensorsignale sind in den lokalen Überwachungsprogrammen 19 realisiert sein.

Durch das zentrale Überwachungsprogramm 109 erfolgt typischerweise die Auswertung aller von den Überwachungsmodulen 1A, ..., 1E gelieferten lokalen Informationen. Im Falle eines Ereignisses mit Ermittlung von Ereignismustern Auswertung können Sensorsignale 101 im Ereignisfall auch zum Zentralcomputer 101 übertragen und erst dort bearbeitet werden. Da auf dem Markt hingegen bereits sehr leistungsfähige Prozessorsysteme z.B. der Firma SparkFun Electronics https://www.sparkfun.com/ mit geringen Abmessungen erhältlich sind, können Überwachungsmodule 1A, ..., 1E mit intelligenten Funktionen bis hin zur Spracherkennung realisiert werden. Mittels des Moduls »Sparkfun Edge -Tensorflow« können komplexe Funktionen peripher bzw. "at the edge" durchgeführt werden. So können mittels dieses Moduls Worte aus Gesprächen bzw. aus lokalen Sensorsignalen extrahiert und als lokale Informationen zur Überwachungszentrale 10 übermittelt werden. Auf diese Weise kann das zur Überwachungszentrale 10 transferierte Datenvolumen wesentlich reduziert werden.

Die Aufteilung von Funktionen kann fest oder dynamisch gewählt werden. Erfindungsgemäß wird ein zur Spracherkennung geeignetes Computermodul 11 verwendet, dessen Spracherkennungsfunktionen zugeschaltet oder abgeschaltet werden kann. Vorzugsweise wird die Spracherkennungsfunktionen genutzt, um Schlüsselworte peripher zu erfassen. Eine weiterführende Auswertung der lokalen Sensorsignale kann hingegen zusätzlich vom Zentralcomputer 101 durchgeführt werden, in dem ein leistungsfähigeres Spracherkennungsprogramm implementiert ist, wie dies z.B. in der US7016842B2 beschrieben ist. Die periphere Spracherkennung dient dabei primär der Detektion des rechtswidrigen Eindringens von Personen, während die zentrale Spracherkennung der Beweissicherung dient.

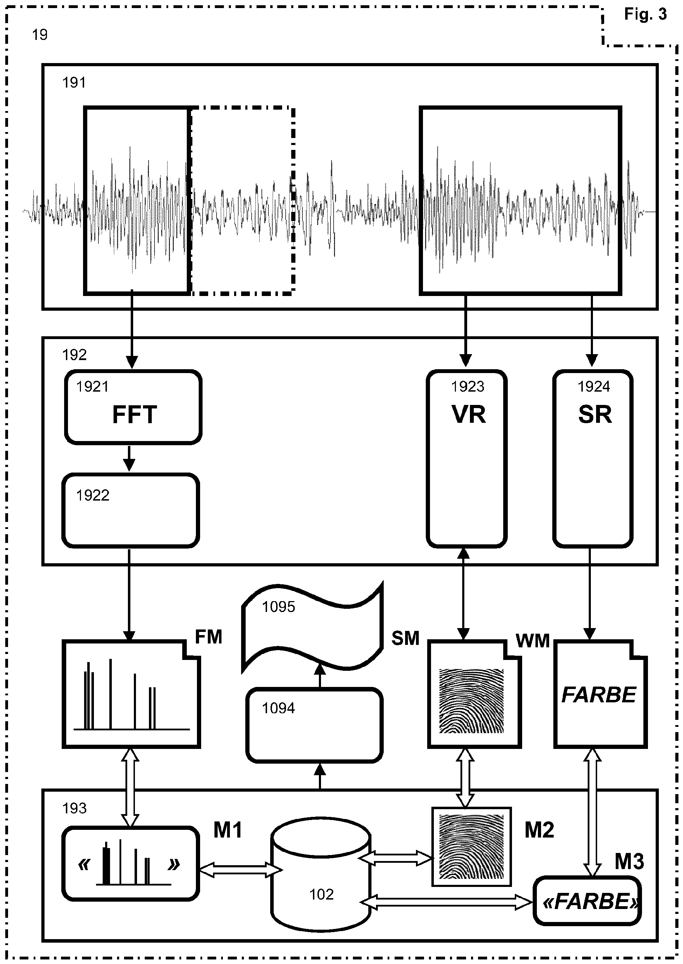

Fig. 3 zeigt Funktionsmodule 191, 192, 193 die im lokalen Überwachungsprogramm 19 der Überwachungsmodule 1A, ..., 1E vorgesehen sind. Das Funktionsmodul 191 ist ein Signalbearbeitungsmodul, welches Sensorsignale, im vorliegenden Fall akustische Sensorsignale vorbearbeitet und gemäss einem Protokoll dem nachgeschalteten Signalauswertungsmodul 192 gegebenenfalls abschnittsweise und gefiltert zur Verfügung stellt. Sprachsignale, welche an die Funktionsmodule 1923 geliefert werden, werden vorzugsweise derart gefiltert, dass ausserhalb des Frequenzbereichs der Sprachsignale vorhandene Signalanteile unterdrückt werden. Dem Funktionsmodul 1921 werden beispielsweise Signalsequenzen einer bestimmten Länge zur Auswertung übertragen. Die Länge der Signalsequenz entspricht z.B. der Länge eines Ereignisses. Vorzugsweise kann das Signalbearbeitungsmodul SBB 20-04 EP 191 Signalsequenzen unterschiedlicher Ereignisse voneinander trennen und getrennt an das Signalauswertungsmodul 192 übermitteln. Ein Signalgemisch kann somit in Signalanteile getrennt und/oder gesamthaft an das Signalauswertungsmodul 192 übertragen werden.

Das Signalauswertungsmodul 192 umfasst das Funktionsmodul 1921, mittels dessen durch Fourier-Transformation das Frequenzspektrum FM der empfangenen Signale bzw. des aufgetretenen Ereignisses ermittelt werden kann. Für alle akustischen Ereignisse können somit die zugehörigen Frequenzmuster FM ermittelt werden. Durch Vergleich mit in der Datenbank 102 gespeicherten Frequenzmustern, die für relevante Ereignisse registriert wurden, können in der überwachten Anlage 1000 aufgetretene Ereignisse identifiziert bzw. einer Handlung zugeordnet werden. Vorzugsweise werden Frequenzmuster für kritische und unkritische Ereignisse in der Datenbank 102 abgelegt.

Vorzugsweise werden für Ereignisse, die typischerweise innerhalb der überwachten Anlage 1000 auftreten, Frequenzmuster registriert, sodass Fehlalarme vermieden werden können. Falls z.B. regelmässig Flugzeuge die Anlage 1000 überfliegen oder in einer benachbarten Fabrik regelmässig eine Sirene betätigt wird, können diese unkritischen Ereignisse anhand zuvor registrierter Referenzmuster identifiziert werden. Eine Übereinstimmung mit kritischen Frequenzmustern, wie Geräuschen einer geschüttelten Spraydose, Sprechgeräuschen, Schlaggeräuschen, Laufgeräuschen, tieffrequenten Vibrationen, verweist hingegen auf das Eindringen von Personen.

Das Funktionsmodul 1924 erlaubt die Spracherkennung zumindest eines oder mehrerer kritischer Begriffe. Beispielsweise wird ein typisches Wort, wie »FARBE«, erkannt, welches auf Graffiti-Aktivitäten schliessen lässt.

Die Identifikation des Wortes »FARBE« ist daher für die Detektion des Eindringens und später für die Beweisführung im Strafprozess besonders relevant.

Das Funktionsmodul 193 ist ein Komparator, welcher zuvor gespeicherte Vergleichsmuster M1, M2, M3, ..., Mx aus der Datenbank 102 lädt und mit den vom Signalauswertungsmodul 192 ermittelten Ereignismustern, wie dem Frequenzmuster FM, und dem Wortmuster WM, vergleicht (FM <--> M1, SM <--> M2, WM <--> M3) und vorzugsweise für jeden Vergleich bzw. für jedes detektierte Ereignis E1, E2, ..., En das Mass der Übereinstimmung %1, %2, ... , %n festlegt.

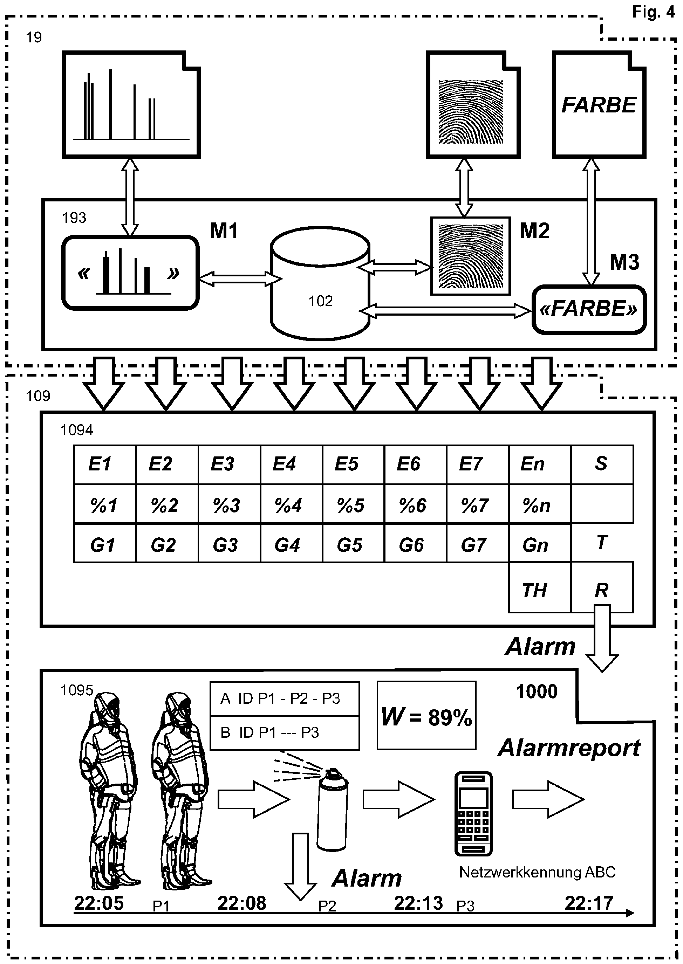

Fig. 3 zeigt ferner ein Auswertemodul 1094 und ein Reporting Modul 1095, die in Fig. 4 näher dargestellt und typischerweise im zentralen Überwachungsprogramm 109 des Zentralcomputers 101 implementiert sind. Im Auswertemodul 1094 werden die ermittelten Ereignisse klassifiziert und entsprechend der Klassifizierung und vorzugsweise der ermittelten Ereigniswahrscheinlichkeit %1, ..., %n und vorzugsweise entsprechend zugeordneten Gewichtungsfaktoren G1, ... Gn ausgewertet. Für die Anzahl S der mit den Unsicherheitsfaktoren %1, %2, ..., %n verrechneten und gegebenenfalls gewichteten Ereignisse E1, E2, ..., En wird vorzugsweise ein Mittelwert T gebildet, der mit einem Schwellwert TH verglichen wird. Entsprechend dem Resultat R, welches oberhalb oder unterhalb des Schwellenwerts TH liegt, wird in der Folge ein Alarm ausgelöst oder nicht. Das Auswertemodul 1094 hingegen auch teilweise in den Überwachungsmodulen 1 realisiert sein, sodass Ereignisse in Verbindung mit Gewichtungsfaktoren G1, ... Gn und/oder Unsicherheitsfaktoren %1, %2, ..., %n dem Zentralcomputer 101 gemeldet werden. Für ermittelte Ereignismuster kann daher bereits durch eines der Überwachungsmodule 1 ein Alarm ausgelöst werden. Alternativ kann ein Alarm auch erst dann ausgelöst werden, nachdem die Ereignismeldungen im Zentralcomputer 101 konsolidiert wurden. Da der Zentralcomputer 101 typischerweise über zusätzliche Informationen bezüglich des Betriebs der Anlage 1000 verfügt, wird ein Alarm vorzugsweise nur durch den Zentralcomputer 101 ausgelöst. Vorzugsweise sind die lokalen Überwachungsprogramme 19 und das zentrale Überwachungsprogramm 109 nach Wunsch des Anwenders konfigurierbar.

Die Ereignisklassen E1, E2 betreffen z.B. unkritische Ereignisse und sind daher mit einem Gewichtungsfaktor nahe Null versehen. Ereignisse, die das Sprayen das Schütteln von Spraydosen oder einschlägige Kennwort betreffen, können hingegen mit einem Gewichtungsfaktor » 1 versehen werden.

Mit Auslösung des Alarms für die Anlage 1000 kann vom Reporting Modul 1095 ein Alarmreport generiert werden, in dem die Ereignisse mit ihrem Ablauf dokumentiert sind.

Beispielsweise wurde das Eindringen von zwei Personen A, B um 22:05 Uhr registriert. Für beide Personen A, B wurden die Bewegungen registriert. Person A bewegte sich von Position P1 zu Position P2 und weiter zu Position P3. Person B bewegte sich von Position P1 zu Position P3. Um 22:08 wurde von Person A eine Spraydose betätigt. Person B benutzte um 22:13 ein Mobiltelefon mit der Netzwerkerkennung ABC. Um 22:10 Uhr wurde der Alarm ausgelöst. Um 22:17 wurden die Personen A, B angehalten.

Die in der Anlage 1000 tatsächlichen registrierten Ereignisse e1, ..., e11, die dem Ereignisablauf im Alarmreport weitgehend entsprechen sind in Fig. 1 abgebildet. Möglicherweise werden auch Trittgeräusche erfasst, die in der Intensität dieser Feststellung sprechen. An Position P2 werden Stimmgeräusche, Schrittgeräusche und Erschütterungen (Ereignisse e3, e4, e5) der Person A erfasst. Aus den Stimmgeräuschen wird ein Schlüsselwort extrahiert. Weiter werden vom Überwachungsmodul 1C Schüttelgeräusche einer Spraydose 81, Spraygeräusche und Gase detektiert (Ereignisse e6, e7, e8). Die Ereignisse e6, e7, e8 sind mit hohen Gewichtungsfaktoren verbunden, weshalb spätestens zu diesem Zeitpunkt ein Alarm ausgelöst wird und das Sicherungspersonal in entsprechender Stärke entsandt wird. Ein Alarm mit dem soweit erstellten Alarmreport wird zu den Endgeräten 110 des Sicherungspersonals übermittelt.

Auch nach Auslösung des Alarms werden die Ereignisse in der überwachten Anlage 1000 weiter registriert. Vom Überwachungsmodul 1B werden Trittgeräusche und Erschütterungen registriert (Ereignisse e9, e10, e11). Weiterhin werden Wireless-Signale eines Mobilfunkgeräts 82 festgestellt (Ereignis e12), welches offenbar von Person B benutzt wird. Im abschliessenden Report kann ferner das Eintreffen des Sicherungspersonals um 22:17 registriert werden. Der Alarmreport mit dem registrierten Ereignisablauf, insbesondere auch dem Bewegungsablauf der Personen A, B kann von der Einsatzleitung vorteilhaft für die Einsatzplanung des Sicherungspersonals verwendet werden.

## Patentansprüche

1. Verfahren zur Überwachung einer Eisenbahnanlage (1000) hinsichtlich des Eindringens von Personen, mit einem Überwachungssystem (100) umfassend
mehrere Sensoren (15) zur Erfassung von Emissionen der Personen oder von Geräten, wie Geräusche, Sprache, Gase, Strahlung und Erschütterungen, und zur Abgabe entsprechender Sensorsignale, sowie
wenigstens eine Computereinheit (11; 101) mit einem implementierten Überwachungsprogramm (19, 109) zur Verarbeitung der Sensorsignale und zur Ermittlung von Informationen zu den Personen,
**dadurch gekennzeichnet, dass** mehrere batteriebetriebene Überwachungsmodule (1, 1A, 1B) innerhalb der Eisenbahnanlage (1000) voneinander beabstandet angeordnet werden;
- die je wenigstens einen Sensor (15) aufweisen, mit dem Emissionen erfasst und entsprechende lokale Sensorsignale gebildet werden;
- die je wenigstens ein Computermodul (11) mit einem Prozessor (110) und einer Speichereinheit (111) aufweisen, in dem ein lokales Überwachungsprogramm (19) implementiert ist, mittels dessen die lokalen Sensorsignale verarbeitet werden, um entsprechende lokale Informationen zu ermitteln;
- die je wenigstens eine Kommunikationseinheit (12) aufweisen, mittels der die lokalen Informationen direkt oder indirekt zu einem Zentralcomputer (101) übertragen werden;
- die ein Gehäuse (13) in der Form eines anlagentypischen Elements, wie der Form eines Schottersteins, aufweisen; und
dass in der Speichereinheit (111) der Computermodule (11) der Überwachungsmodule (1, 1A, 1B) Mustersignale oder Musterinformationen bzw. Vergleichsmuster (M) gespeichert werden, die für das Eindringen der Personen typische oder für die Eisenbahnanlage (1000) typische Ereignisse (E1, E2, ..., En) repräsentieren;
dass mittels des lokalen Überwachungsprogramms (19) für die lokalen Sensorsignale in den Computermodulen (11) Ereignismuster ermittelt und mit gespeicherten Vergleichsmustern (M) verglichen werden, um lokale Informationen zu ermitteln, die zum Zentralcomputer (101) übertragen werden; und
dass im Zentralcomputer (101) ein zentrales Überwachungsprogramm (109) implementiert ist, welches die von den Überwachungsmodulen (1A, 1B) abgegebenen lokalen Informationen auswertet, um zum Verhalten eindringender Personen innerhalb der überwachten Eisenbahnanlage (1000) Ereignisse (E1; E2; ..., En) individuell oder miteinander verknüpft als Ereignisabläufe (E1 - E2 - E3, ..., En) zu ermitteln, wobei dass das lokale Überwachungsprogramm (19) der Überwachungsmodule (1A, 1B) ein Spracherkennungsmodul aufweist, mittels dessen Ereignismuster hinsichtlich des Vorliegens von Sprache oder Worten ausgewertet werden.

2. Verfahren nach Anspruch 1, **dadurch gekennzeichnet, dass** Ereignismuster in der Form von Datenmustern und/oder Frequenzmustern und/oder Wortmustern gebildet werden.

3. Verfahren nach Anspruch 1 oder 2, **dadurch gekennzeichnet, dass** die Ereignisse (E1; E2; ..., En) und Ereignisabläufe (E1 - E2 - E3, ..., En) unter Berücksichtigung von Ortsinformationen der Eisenbahnanlage (1000) und/oder von Positionsdaten der Überwachungsmodule (1A, 1B), die vorzugsweise je ein Lokalisierungsmodul, wie ein GPS-Modul, aufweisen, analysiert und ausgewertet werden.

4. Verfahren nach einem der Ansprüche 1 - 3, **dadurch gekennzeichnet, dass** für die Ereignisabläufe (E1 - E2 - E3, ..., En) Ereignisdetails ermittelt werden, wie der zeitliche Verlauf der Ereignisse (E1; E2; ..., En), die Anzahl der Personen, das Bewegungsverhalten der Personen, der Bewegungsverlauf der Personen, Schlüsselworte der Personen, die Bekleidung der Personen, mitgeführte Werkzeuge, und/oder mitgeführte Geräte, wie Werkzeuge und Telekommunikationsmittel.

5. Verfahren nach einem der Ansprüche 1 - 4, **dadurch gekennzeichnet, dass** die Ereignismuster nach dem Vergleich mit Vergleichsmustern (M) als Ereignis (E1, E2, ..., En) je einer Ereignisklasse zugeordnet werden, und dass den einzelnen Ereignisklassen Regeln zugeordnet sind, entsprechend denen die Ereignisse (E1, E2, ..., En) zu behandeln sind.

6. Verfahren nach Anspruch 5, **dadurch gekennzeichnet, dass** den Ereignisklassen (E1, E2, ..., En) je ein Gewichtungsfaktor (G1, G2, ..., Gn), der in Abhängigkeit der Relevanz für das Eindringen von Personen gewählt ist, zugeordnet ist und dass der Entscheid zum Vorliegen eines Eindringens von Personen unter Berücksichtigung der zugeordneten Gewichtungsfaktoren (G1, G2, ..., Gn) gefällt wird, wobei für die Anzahl (S) der gewichteten Ereignisse (E1, E2, ..., En) vorzugsweise ein Mittelwert gebildet wird, der mit einem Schwellwert (TH) verglichen wird.

7. Verfahren nach Anspruch 5 oder 6, **dadurch gekennzeichnet, dass** den Ereignisklassen (E1, E2, ..., En) je ein Unsicherheitsfaktor (%1, %2, ..., %n), der das Mass der Übereinstimmung der Ereignismuster mit den Vergleichsmustern (M) repräsentiert, zugeordnet wird und dass der Entscheid zum Vorliegen eines Eindringens von Personen unter Berücksichtigung der zugeordneten Unsicherheitsfaktoren (%1, %2, ..., %n) gefällt wird, wobei für die Anzahl (S) der mit den Unsicherheitsfaktoren (%1, %2, ..., %n) verrechneten und gegebenenfalls gewichteten Ereignisse (E1, E2, ..., En) vorzugsweise ein Mittelwert gebildet wird, der mit dem Schwellwert (TH) verglichen wird.

8. Verfahren nach einem der Ansprüche 1 - 7, **dadurch gekennzeichnet, dass** die Überwachungsmodule (1A, 1B) über bidirektionale Kommunikationskanäle miteinander verbunden sind und/oder dass der Zentralcomputer (101) über einen unidirektionalen oder bidirektionalen Kommunikationskanäle je mit wenigstens einem der Überwachungsmodule (1A, 1B) verbunden ist, und
a) dass die von jedem der Überwachungsmodule (1A, 1B) abgegebenen lokalen Sensorsignale oder Informationen direkt von jedem der Überwachungsmodul (1A, 1B) oder indirekt über eines der Überwachungsmodule (1A, 1B) zum Zentralcomputer (101) übertragen werden; und/oder
b) dass jedes der Überwachungsmodule (1A, 1B) durch wenigstens eines der benachbarten Überwachungsmodule (1A, 1B) überwacht wird, und/oder
c) dass das Überwachungssystem (100) in Abhängigkeit der im Betriebszustand befindlichen Überwachungsmodule (1A, 1B) jeweils konfiguriert oder rekonfiguriert wird.

9. Verfahren nach einem der Ansprüche 1 - 8, **dadurch gekennzeichnet, dass** eine Alarmmeldung zum Vorliegen des Eindringens von Personen zusammen mit einem Alarmreport, der vorzugsweise ermittelte Ereignisabläufe und Ereignisdetails umfasst, visuell oder visuell und akustisch auf wenigstens einem stationären oder mobilen Terminal (110) des Überwachungspersonals angezeigt wird.

10. Überwachungssystem (100) zur Überwachung einer Eisenbahnanlage (1000) hinsichtlich des Eindringens von Personen gemäss dem Verfahren nach einem der Ansprüche 1 - 9. umfassend mehrere Sensoren (15) zur Erfassung von Emissionen der Personen oder von Geräten, wie Geräusche, Sprache, Gase, Strahlung und Erschütterungen, und zur Abgabe entsprechender Sensorsignale, sowie wenigstens eine Computereinheit (11; 101) mit einem implementierten Überwachungsprogramm (19, 109) zur Verarbeitung der Sensorsignale und zur Ermittlung von Informationen zu den Personen,
**dadurch gekennzeichnet, dass** mehrere batteriebetriebene Überwachungsmodule (1, 1A, 1B) innerhalb der Eisenbahnanlage (1000) voneinander beabstandet angeordnet sind;
- die je wenigstens einen Sensor (15) aufweisen, mit dem Emissionen erfassbar und entsprechende lokale Sensorsignale bildbar sind;
- die je wenigstens ein Computermodul (11) mit einem Prozessor (110) und einer Speichereinheit (111) aufweisen, in dem ein lokales Überwachungsprogramm (19) implementiert ist, mittels dessen die lokalen Sensorsignale verarbeitbar sind, um entsprechende lokale Informationen zu ermitteln;
- die je wenigstens eine Kommunikationseinheit (12) aufweisen, mittels der die lokalen Informationen direkt oder indirekt zu einem Zentralcomputer (101) übertragbar sind;
- die ein Gehäuse (13) in der Form eines anlagentypischen Elements, wie der Form eines Schottersteins, aufweisen; und
dass in der Speichereinheit (111) der Computermodule (11) der Überwachungsmodule (1, 1A, 1B) Mustersignale oder Musterinformationen bzw. Vergleichsmuster (M) gespeichert sind, die für das Eindringen der Personen typische oder für die Eisenbahnanlage (1000) typische Ereignisse (E1, E2, ..., En) repräsentieren;
dass das lokale Überwachungsprogramm (19) der Überwachungsmodule (1A, 1B) ein Spracherkennungsmodul aufweist, mittels dessen Ereignismuster hinsichtlich des Vorliegens von Worten auswertbar sind;
dass mittels des lokalen Überwachungsprogramms (19) für die lokalen Sensorsignale in den Computermodulen (11) Ereignismuster ermittelbar und mit gespeicherten Vergleichsmustern (M) vergleichbar sind, um lokale Informationen zu ermitteln, die zum Zentralcomputer (101) übertragbar sind; und
dass im Zentralcomputer (101) ein zentrales Überwachungsprogramm (109) implementiert ist, mittels dessen die von den Überwachungsmodulen (1A, 1B) abgegebenen lokalen Informationen auswertbar sind, um zum Verhalten eindringender Personen innerhalb der überwachten Eisenbahnanlage (1000) Ereignisse (E1; E2; ..., En) individuell oder miteinander verknüpft als Ereignisabläufe (E1 - E2 - E3, ..., En) zu ermitteln.

## Claims

1. Method for monitoring a railway system (1000) regarding the intrusion of persons, with a monitoring system (100) comprising
a plurality of sensors (15) for detecting emissions from persons or from devices, such as noise, speech, gases, radiation and vibrations, and for emitting corresponding sensor signals, and
at least one computer unit (11; 101) with a monitoring programme (19, 109) implemented for processing the sensor signals and for determining information about the persons,
**characterised in that** a plurality of battery-powered monitoring modules (1, 1A, 1B) are arranged at a distance from one another within the railway system (1000);
- each comprising at least one sensor (15) for detecting emissions and forming corresponding local sensor signals;
- each comprising at least one computer module (11) with a processor (110) and a memory unit (111), in which a local monitoring program (19) is implemented, by means of which the local sensor signals are processed to determine corresponding local information;
- each comprising at least one communication unit (12) by means of which the local information is transmitted directly or indirectly to a central computer (101);
- having a housing (13) in the shape of a system-typical element, such as the shape of a railroad ballast stone; and
that sample signals or sample information or comparison patterns (M) are stored in the memory unit (111) of the computer modules (11) of the monitoring modules (1, 1A, 1B), which represent events (E1, E2, ..., En) typical of the intrusion of persons or typical of the railway system (1000);
that by means of the local monitoring programme (19) for the local sensor signals in the computer modules (11), event patterns are determined and compared with stored comparison patterns (M) to determine local information that is transmitted to the central computer (101); and
that a central monitoring program (109) is implemented in the central computer (101), which evaluates the local information output by the monitoring modules (1A, 1B) in order to determine events (E1; E2; ...; En) individually or linked together as event sequences (E1 - E2 - E3, ..., En), wherein the local monitoring programme (19) of the monitoring modules (1A, 1B) has a speech recognition module, by means of which event patterns are evaluated with regard to the presence of speech or words.

2. Method according to claim 1, **characterised in that** event patterns are created in the form of data patterns and/or frequency patterns and/or word patterns.

3. Method according to claim 1 or 2, **characterised in that** the events (E1; E2; ...; En) and event sequences (E1 - E2 - E3, ...; En) are analysed and evaluated taking into account location information of the railway system (1000) and/or position data of the monitoring modules (1A, 1B), which preferably each have a localisation module, such as a GPS module.

4. Method according to one of the claims 1 - 3, **characterised in that** event details are determined for the event sequences (E1 - E2 - E3, ..., En), such as the temporal course of the events (E1; E2 ; ... En), the number of persons, the movement behaviour of the persons, the movement path of the persons, keywords of the persons, the clothing of the persons, tools carried, and/or devices carried, such as tools and means of telecommunication.

5. Method according to one of the claims 1-4, **characterised in that** the event patterns after comparison with comparison patterns (M) are assigned as an event (E1, E2, ..., En) to one event class each, and that rules are assigned to the individual event classes, according to which the events (E1, E2, ..., En) are to be treated.

6. Method according to claim 5, **characterised in that** a weighting factor (G1, G2, ..., Gn) selected as a function of the relevance for the intrusion of persons is assigned to each of the event classes (E1, E2, ..., En) and that the decision on the presence of an intrusion of persons is made taking into account the associated weighting factors (G1, G2, ..., Gn), wherein a mean value is preferably formed for the number (S) of weighted events (E1, E2, ..., En) and is compared with a threshold value (TH).

7. Method according to claim 5 or 6, **characterised in that** an uncertainty factor (%1, %2, ..., %n), which represents the degree of matching of the event patterns with the comparison patterns (M), is assigned to each of the event classes (E1, E2, ..., En) and **in that** the decision on the presence of intruders is made taking into account the associated uncertainty factors (%1, %2, ..., %n), preferably by forming a mean value for the number (S) of events (E1, E2, ..., En) that are associated with the uncertainty factors (%1, %2, ..., %n) and optionally weighted, which mean value is compared with the threshold value (TH).

8. Method according to one of the claims 1 - 7, **characterised in that** the monitoring modules (1A, 1B) are connected to one another via bidirectional communication channels and/or that the central computer (101) is connected to at least one of the monitoring modules (1A, 1B) via a unidirectional or bidirectional communication channel, and
a) that the local sensor signals or information provided by each of the monitoring modules (1A, 1B) are transmitted directly from each of the monitoring modules (1A, 1B) or indirectly via one of the monitoring modules (1A, 1B) to the central computer (101); and/or
b) that each of the monitoring modules (1A, 1B) is monitored by at least one of the neighbouring monitoring modules (1A, 1B), and/or
c) that the monitoring system (100) is configured or reconfigured depending on the monitoring modules (1A, 1B) that are in the operating state.

9. Method according to one of the claims 1 - 8, **characterised in that** an alarm message indicating the presence of intruders, together with an alarm report, which preferably includes event sequences and event details, is visually or visually and acoustically displayed on at least one stationary or mobile terminal (110) of the surveillance personnel.

10. Monitoring system (100) for monitoring a railway system (1000) with respect to the intrusion of persons according to the method according to one of the claims 1-9, comprising
a plurality of sensors (15) for detecting emissions from persons or from devices, such as noise, speech, gases, radiation and vibrations, and for emitting corresponding sensor signals, and
at least one computer unit (11; 101) with a monitoring programme (19, 109) implemented for processing the sensor signals and for determining information about the persons, **characterised in that** a plurality of battery-powered monitoring modules (1, 1A, 1B) are arranged at a distance from one another within the railway system (1000);
- each having at least one sensor (15) with which emissions can be detected and corresponding local sensor signals can be formed;
- each comprising at least one computer module (11) with a processor (110) and a memory unit (111), in which a local monitoring program (19) is implemented, by means of which the local sensor signals can be processed to determine corresponding local information;
- each comprising at least one communication unit (12) by means of which the local information can be transmitted directly or indirectly to a central computer (101);
- which comprise a housing (13) in the shape of a system-typical element, such as the shape of a railroad ballast stone; and
that sample signals or sample information or comparison patterns (M) are stored in the memory unit (111) of the computer modules (11) of the monitoring modules (1, 1A, 1B), which represent events (E1, E2, ..., En) typical of the intrusion of persons or typical of the railway system (1000);
that the local monitoring program (19) of the monitoring modules (1A, 1B) comprises a speech recognition module by means of which event patterns can be evaluated regarding the presence of words;
that by means of the local monitoring program (19) for the local sensor signals in the computer modules (11), event patterns can be determined and compared with stored comparison patterns (M) to determine local information that can be transmitted to the central computer (101); and
that a central monitoring program (109) is implemented in the central computer (101), by means of which the local information provided by the monitoring modules (1A, 1B) can be evaluated in order to determine events (E1; E2;... En) individually or linked together as event sequences (E1 - E2 - E3, ..., En) that relate to the behaviour of intruders within the monitored railway system (1000).

## Revendications

1. Procédé de surveillance d'une installation ferroviaire (1000) en ce qui concerne l'intrusion de personnes, avec un système de surveillance (100) comprenant
plusieurs capteurs (15) pour détecter les émissions des personnes ou des appareils, comme les bruits, la parole, les gaz, les rayonnements et les vibrations, et pour émettre des signaux de capteur correspondants, ainsi que
au moins une unité informatique (11 ; 101) avec un programme de surveillance (19, 109) mis en oeuvre pour le traitement des signaux de capteur et pour la détermination d'informations sur les personnes,
**caractérisé en ce que** plusieurs modules de surveillance (1, 1A, 1B) alimentés par batterie sont disposés à l'intérieur de l'installation ferroviaire (1000) en étant espacés les uns des autres ;
- qui présentent chacun au moins un capteur (15) avec lequel des émissions sont détectées et des signaux de capteur locaux correspondants sont formés;
- qui présentent chacun au moins un module ordinateur (11) avec un processeur (110) et une unité de mémoire (111), dans lequel est mis en oeuvre un programme de surveillance local (19), au moyen duquel les signaux de capteurs locaux sont traités pour déterminer des informations locales correspondantes;
- qui présentent chacun au moins une unité de communication (12) au moyen de laquelle les informations locales sont transmises directement ou indirectement à un ordinateur central (101);
- qui comportent un boîtier (13) ayant la forme d'un élément typique de l'installation, tel que la forme d'une pierre concassée ; et
que dans l'unité de mémoire (111) des modules informatiques (11) des modules de surveillance (1, 1A, 1B) sont mémorisés des signaux de modèle ou des informations de modèle ou des patterns de comparaison (M) qui représentent des événements (E1, E2, ..., En) typiques de l'intrusion des personnes ou typiques de l'installation ferroviaire (1000) ;
**en ce qu'**au moyen du programme de surveillance local (19) pour les signaux de capteur locaux dans les modules d'ordinateur (11), des modèles d'événement sont déterminés et comparés à des patterns de comparaison (M) mémorisés, afin de déterminer des informations locales qui sont transmises à l'ordinateur central (101) ; et
qu'un programme de surveillance central (109) est implémenté dans l'ordinateur central (101), lequel évalue les informations locales délivrées par les modules de surveillance (1A, 1B) afin de déterminer des événements (E1 ; E2 ; ... ; En) individuellement ou combinés entre eux sous forme de séquences d'événements (E1 - E2 - E3, ..., En), **en ce que** le programme de surveillance local (19) des modules de surveillance (1A, 1B) présente un module de reconnaissance de la parole, au moyen duquel des modèles d'événements sont évalués en ce qui concerne la présence de parole ou de mots.

2. Procédé selon la revendication 1, **caractérisé en ce que** des modèles d'événements sont formés sous la forme de modèles de données et/ou de modèles de fréquences et/ou de modèles de mots.

3. Procédé selon la revendication 1 ou 2, **caractérisé en ce que** les événements (E1 ; E2 ; ..., En) et les séquences d'événements (E1 - E2 - E3, ..., En) sont analysés et exploités en tenant compte d'informations de localisation de l'installation ferroviaire (1000) et/ou de données de position des modules de surveillance (1A, 1B), qui comportent de préférence chacun un module de localisation, tel qu'un module GPS.

4. Procédé selon une des revendications 1 - 3, **caractérisé en ce que** pour les séquences d'événements (E1 - E2 - E3, ..., En), des détails d'événements sont déterminés, comme le déroulement temporel des événements (E1 ; E2 ; ..., En), le nombre de personnes, le comportement de déplacement des personnes, le déroulement de déplacement des personnes, des mots clés des personnes, l'habillement des personnes, des outils emportés, et/ou des appareils emportés, comme des outils et des moyens de télécommunication.

5. Procédé selon une des revendications 1 - 4, **caractérisé en ce que** les modèles d'événements sont affectés chacun à une classe d'événements après comparaison avec des patterns de comparaison (M) en tant qu'événement (E1, E2, ..., En), et **en ce que** des règles sont affectées aux différentes classes d'événements, selon lesquelles les événements (E1, E2, ..., En) doivent être traités.

6. Procédé selon la revendication 5, **caractérisé en ce qu'** à chaque classe d'événements (E1, E2, ..., En) est associé un facteur de pondération (G1, G2, ..., Gn) choisi en fonction de la pertinence pour l'intrusion de personnes et **en ce que** la décision de l'existence d'une intrusion de personnes est prise en tenant compte des facteurs de pondération associés (G1, G2, ..., Gn). Gn), une valeur moyenne étant de préférence formée pour le nombre (S) d'événements pondérés (E1, E2, ..., En), laquelle est comparée à une valeur seuil (TH).

7. Procédé selon la revendication 5 ou 6, **caractérisé en ce que** à chaque classe d'événements (E1, E2, ..., En) est associé un facteur d'incertitude (%1, %2, ..., %n) représentant le degré de concordance des modèles d'événements avec les patterns de comparaison (M) et **en ce que** la décision relative à l'existence d'une intrusion de personnes est prise en tenant compte des facteurs d'incertitude associés (%1, %2, ..., %n). %n), dans lequel, pour le nombre (S) des événements (E1, E2, ..., En) calculés avec les facteurs d'incertitude (%1, %2, ..., %n) et éventuellement pondérés, on forme de préférence une valeur moyenne qui est comparée à la valeur seuil (TH).

8. Procédé selon une des revendications 1 - 7, **caractérisé en ce que** les modules de surveillance (1A, 1B) sont interconnectés par des canaux de communication bidirectionnels et/ou **en ce que** l'ordinateur central (101) est interconnecté par un canal de communication unidirectionnel ou bidirectionnel respectivement avec au moins un des modules de surveillance (1A, 1B), et
a) que les signaux de capteur locaux émis par chacun des modules de surveillance (1A, 1B) ou les informations sont transmis à l'ordinateur central (101) directement par chacun des modules de surveillance (1A, 1B) ou indirectement par l'intermédiaire de l'un des modules de surveillance (1A, 1B) ; et/ou
b) que chacun des modules de surveillance (1A, 1B) est surveillé par au moins l'un des modules de surveillance (1A, 1B) voisins, et/ou
c) que le système de surveillance (100) est respectivement configuré ou reconfiguré en fonction des modules de surveillance (1A, 1B) se trouvant dans l'état de fonctionnement.

9. Procédé selon une des revendications 1 - 8, **caractérisé en ce qu'** un message d'alarme concernant la présence d'une intrusion de personnes est affiché visuellement ou visuellement et acoustiquement sur au moins un terminal fixe ou mobile (110) du personnel de surveillance, conjointement avec un rapport d'alarme comprenant de préférence des séquences d'événements et des détails d'événements déterminés.

10. Système de surveillance (100) pour la surveillance d'une installation ferroviaire (1000) en ce qui concerne l'intrusion de personnes selon le procédé selon l'une des revendications 1-9, comprenant
plusieurs capteurs (15) pour détecter les émissions des personnes ou des appareils, comme les bruits, la parole, les gaz, les rayonnements et les vibrations, et pour émettre des signaux de capteur correspondants, ainsi que
au moins une unité ordinateur (11; 101) avec un programme de surveillance (19, 109) mis en oeuvre pour le traitement des signaux de capteur et pour la détermination d'informations sur les personnes,
**caractérisé en ce que** plusieurs modules de surveillance (1, 1A, 1B) alimentés par batterie sont disposés à l'intérieur de l'installation ferroviaire (1000) en étant espacés les uns des autres;
- qui présentent chacun au moins un capteur (15) avec lequel des émissions peuvent être détectées et des signaux de capteur locaux correspondants peuvent être formés;
- qui présentent chacun au moins un module ordinateur (11) avec un processeur (110) et une unité de mémoire (111), dans lequel est mis en oeuvre un programme de surveillance local (19), au moyen duquel les signaux de capteur locaux peuvent être traités pour déterminer des informations locales correspondantes;
- qui présentent chacun au moins une unité de communication (12) au moyen de laquelle les informations locales peuvent être transmises directement ou indirectement à un ordinateur central (101) ;
- qui comportent un boîtier (13) ayant la forme d'un élément typique d'une installation, tel que la forme d'une pierre concassée ; et
que dans l'unité de mémoire (111) des modules informatiques (11) des modules de surveillance (1, 1A, 1B) sont enregistrés des signaux de modèle ou des informations de modèle ou des patterns de comparaison (M) qui représentent des événements (E1, E2, ..., En) typiques de l'intrusion des personnes ou typiques de l'installation ferroviaire (1000) ;
que le programme de surveillance local (19) des modules de surveillance (1A, 1B) présente un module de reconnaissance vocale, au moyen duquel des modèles d'événements peuvent être évalués en ce qui concerne la présence de mots;
qu'au moyen du programme de surveillance local (19) pour les signaux de capteur locaux dans les modules d'ordinateur (11) des modèles d'événement peuvent être déterminés et comparés à des patterns de comparaison (M) mémorisés, afin de déterminer des informations locales qui peuvent être transmises à l'ordinateur central (101); et
qu'un programme de surveillance central (109) est mis en oeuvre dans l'ordinateur central (101), au moyen duquel les informations locales délivrées par les modules de surveillance (1A, 1B) peuvent être évaluées, afin de déterminer des événements (E1 ; E2 ; ..., En) individuels ou combinés entre eux en tant que séquences d'événements (E1 - E2 - E3, ..., En) concernant le comportement de personnes pénétrant à l'intérieur de l'installation ferroviaire surveillée (1000).
